Europäisches Patentamt

European Patent Office

Office européen des brevets

(19)

(11) Veröffentlichungsnummer: **0 330 066**

**A2**

(12) ## EUROPÄISCHE PATENTANMELDUNG

(21) Anmeldenummer: 89102611.4

(22) Anmeldetag: 16.02.89

(51) Int. Cl.⁴: **A47J 31/057 , A47J 31/44**

(30) Priorität: 26.02.88 DE 3806112

(43) Veröffentlichungstag der Anmeldung:
30.08.89 Patentblatt 89/35

(84) Benannte Vertragsstaaten:
CH FR GB IT LI NL SE

(71) Anmelder: **ROBERT KRUPS STIFTUNG & CO. KG.**
**Heresbachstrasse 29**
**D-5650 Solingen 19(DE)**

(72) Erfinder: **Precht Hans-Juergen**
**Westfalenweg 22**
**D-5650 Solingen 1(DE)**
Erfinder: **Beumer Klaus**
**Olga Strasse 49**
**D-5650 Solingen 11(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Gerät zum Zubereiten von heissen Getränken, wie Kaffee, Tee od. dgl.**

(57) Es handelt sich um ein Gerät zum Zubereiten von heißen Getränken, wie Kaffee, Tee od.dgl., welches ein Gehäuse zur Unterbringung von Schalt- und Steuerelementen sowie einer Heizeinrichtung aufweist. Das Gerät hat ferner einen Frischwasserbehälter, der zum Erkennen seines Füllstandes mit einer rohrförmigen, eine Skala aufweisenden Wasserstandsanzeige ein kommunizierendes System bildet. Um auf schwimmerartige Körper zur Anzeige des Füllstandes des Frischwasserbehälters zu verzichten, ist die Wasserstandsanzeige als optische Linse ausgebildet. Dies geschieht derart, daß die Skala und ihre Zahlen, Buchstaben od.dgl. in dem mit Wasser gefüllten Längenbereich der Wasserstandsanzeige vergrößert, in dem darüber angeordneten anderen Längenbereich dagegen verkleinert sichtbar sind. Der Übergang zwischen den beiden Längenbereichen gibt dabei den Füllstand des Frischwasserbehälters wieder.

FIG. 4

## Gerät zum Zubereiten von heißen Getränken, wie Kaffee, Tee od.dgl.

Die Erfindung bezieht sich auf ein Gerät zum Zubereiten von heißen Getränken, wie Kaffee, Tee od.dgl., mit einem Gehäuse zur Unterbringung von Schalt- und Steuerelementen sowie einer Heizeinrichtung und mit einem Frischwasserbehälter, der zum Erkennen seines Füllstandes mit einer rohrförmigen, eine Skala aufweisenden Wasserstandsanzeige ein kommunizierendes System bildet.

Derartige Geräte zum Zubereiten von heißen Getränken, wie Kaffee, Tee od.dgl. sind in zahlreichen Ausführungsformen bekannt. Dies gilt auch für die an solchen Geräten angebrachte Wasserstandsanzeige. Diese Wasserstandsanzeige hat grundsätzlich den Vorteil, daß der Benutzer von außen her den jeweiligen Füllstand des Frischwasserbehälters erkennen kann. Ein Abnehmen des Deckels, der die obere Öffnung des Frischwasserbehälters verschließt, ist dabei nicht erforderlich. In aller Regel sind die Wasserstandsanzeiger bekannter Geräte zum Zubereiten von heißen Getränken so ausgebildet, daß ein Hohlrohr außen am Gehäuse des Gerätes angebracht ist. Dabei ist ein solches Rohr in der Regel über eine zwischengeschaltete Dichtung mit dem Frischwasserbehälter derart verbunden, daß dieser mit dem Rohr ein kommunizierendes System bildet. Dies bedeutet, daß das Wasser in dem Frischwasserbehälter genau so hoch steht wie in dem außen angebrachten rohrförmigen Wasserstandsanzeiger. Dem Wasserstandsanzeiger ist dabei in aller Regel eine Skala zugeordnet, die mit Symbolen versehen ist, die beispielsweise die Anzahl der Tassen angibt.

Um dabei die Höhe der Wassersäule in dem rohrförmigen Wasserstandsanzeiger gut erkennen zu können, hat man bisher Schwimmer, z.B. eine Kugel benutzt, welche die Bewegung des Wassers im Wasserstandsanzeiger mitmacht, wobei sie sich stets an der Oberfläche des Wassers im Wasserstandsanzeiger befindet. Dabei wird in aller Regel auch ein Einfärben eines solchen Schwimmerkörpers vorgenommen, um eine gute Ablesbarkeit der Skala zu erreichen. Derartige Ausführungsformen arbeiten so lange zufriedenstellend, als es nicht zu einem Festklemmen oder Hängenbleiben des schwimmerartigen Körpers an den inneren Begrenzungswandungen der Wasserstandsanzeige kommt. In der Praxis hat sich nämlich gezeigt, daß ein derartiges Hängenbleiben des Schwimmerkörpers durchaus erfolgen kann. Ist dies gesch-ehen, dann ist die Wasserstandsanzeige praktisch für den Benutzer unbrauchbar, weil der hängengebliebene Schwimmer dann nicht die tatsächliche Wassermenge des Frischwasserbehälters anzeigt. Darüber hinaus haben diese bekannten Ausführungsformen den Nachteil, daß man in dem rohrförmigen Wasserstandsanzeiger einen Schwimmerkörper unterbringen muß, also ein zusätzliches Bauteil benötigt.

Hier will die Erfindung Abhilfe schaffen. Sie will eine Wasserstandsanzeige für den Füllzustand eines Frischwasserbehäl ters zum Zubereiten von heißen Getränken, wie Kaffee, Tee od.dgl. aufzeigen, der ohne einen derartigen Schwimmerkörper auskommt. Dabei soll ferner eine gute Ablesbarkeit der Skala vorhanden sein und die Wasserstandsanzeige wirtschaftlich herstellbar sein.

Aufgabe der vorliegenden Erfindung ist es daher, Geräte zum Zubereiten von heißen Getränken, wie Kaffee, Tee od.dgl. der eingangs näher gekennzeichneten Art weiter zu verbessern, derart, daß der Aufwand bei der Herstellung einer Wasserstandsanzeige im Vergleich mit dem Bekannten reduziert wird und daß für den Benutzer eines solchen Gerätes eine Wasserstandsanzeige zur Verfügung steht, die gut ablesbar ist. Dabei soll zugleich eine solche Wasserstandsanzeige in wirtschaftlicher Weise hergestellt werden können.

Dieses Ziel ist erfindungsgemäß dadurch erreicht, daß die Wasserstandsanzeige als optische Linse ausgebildet ist, derart, daß die Skala und ihre Zahlen, Buchstaben od.dgl. in dem mit Wasser gefüllten Längenbereich der Wasserstandsanzeige vergrößert, im darüber angeordneten Längenbereich dagegen verkleinert sichtbar sind, wobei der Übergang zwischen den beiden Längenbereichen den Füllstand des Frischwasserbehälters angibt. Die erfindungsgemäße Ausbildung der Wasserstandsanzeige hat zunächst den Vorteil, daß auf die Verwendung von schwimmerartigen Körpers, z.B. von eingefärbten Kugeln, ganz verzichtet werden kann. Dadurch wird nicht nur die Herstellung der Wasserstandsanzeige vereinfacht sondern es wird auch vermieden, daß ein solcher Schwimmer, gleichgültig aus welchem Grunde, an den Innenwandungen des rohrförmigen Wasserstandsanzeigers hängen bleibt. Dadurch, daß der mit Wasser gefüllte Längenbereich der Wasserstandsanzeige vergrößert wiedergegeben wird, sind die Buchstaben, Zahlen od.dgl., die auf der Skala angebracht sind, für den Benutzer sehr gut sichtbar. Dies gilt auch für den scharfen Übergang vom vergrößerten zum verkleinerten Bereich der Wasserstandsanzeige, der Auskunft über den jeweiligen Füllstand des Frischwasserbehälters gibt.

Bei der bevorzugten Ausführungsform der Erfindung ist die aus einem durchsichtigen und brechenden Stoff hergestellte optische Linse von zwei Zylinderhälften begrenzt. Dabei ist es auch möglich, der einen Zylinderfläche den Radius unendlich zu geben, d.h. sie als Planfläche auszubilden. Zur Herstellung der Wasserstandsanzeige können durchsichtige und brechende Stoffe eingesetzt werden. Neben Glas ist auch der Einsatz von Kunststoffen möglich.

Hinsichtlich der Anbringung der Skala, die mit der erfindungsgemäßen Wasserstandsanzeige zusammenarbeitet, ergeben sich mehrere Möglichkeiten. Nach einem ersten Vorschlag der Erfindung ist die Skala mit ihren Symbolen, wie Buchstaben, Zahlen od.dgl. auf der dem Frischwasserbehälter zugekehrten Seite, vorzugsweise der Außenseite der Wasserstandsanzeige angebracht. Für das Anbringen der Skala an der einen Seite der Wasserstandsanzeige können alle in der Praxis bekannten Verbindungsarten eingesetzt werden. Beispielsweise ist ein Ankleben möglich.

Nach einem anderen Vorschlag der Erfindung ist demgegenüber die Skala auf einer vorzugsweise ebenen Begrenzungswand des Frischwasserbehälters angebracht, während die Wasserstandsanzeige davor liegt. Im letztgenannten Falle erfolgt somit keine unmittelbare Verbindung der Skala mit der Wasserstandsanzeige. Vielmehr wird eine vorzugsweise ebene Außenfläche des Frischwasserbehälters als Träger für eine solche Skala benutzt. Dies hat den Vorteil, daß man in einfacher Weise die Skala auf einer solchen Fläche anbringen kann.

In einer dritten Ausgestaltung der Erfindung wäre es auch denkbar, auf die Verwendung einer zusätzlichen Skala zu verzichten und stattdessen die Symbole, wie Buchstaben, Zahlen od.dgl., unmittelbar auf der einen Seite des Frischwasserbehälters anzubringen, beispielsweise auf der der Wasserstandsanzeige benachbarten Fläche des Frischwasserbehälters. Aus wirtschaftlichen Gründen empfiehlt es sich, die Symbole bei der Herstellung des Frischwasserbehälters dann sofort auf der einen Außenseite anzubringen.

Es empfiehlt sich, die die Wasserstandsanzeige aufweisende ebene Begrenzungswand des Frischwasserbehälters geneigt zur Vorderseite des Frischwasserbehälters anzuordnen. Dies hat den Vorteil, daß die Wasserstandsanzeige auch dann gut vom Benutzer des Gerätes zum Zubereiten von heißen Getränken, wie Kaffee, Tee od.dgl., betrachtet werden kann, wenn das Auffanggefäß für das fertige Getränk bzw. der Filter in seine Gebrauchslage überführt ist. Trotzdem bleibt die Vorderseite des Kaffeeautomaten od.dgl. frei von der Wasserstandsanzeige, was sich für das Aussehen und die Herstellung das Kaffeeautomaten günstig auswirkt.

Auf der Zeichnung ist die Erfindung in mehreren Ausführungsbeispielen dargestellt und zwar zeigen:

Fig. 1 in Seitenansicht ein erfindungsgemäß ausgebildetes Gerät zum Zubereiten von heißen Getränken, wie Kaffee, Tee od.dgl. mit der Wasserstandsanzeige,

Fig. 2 im vergrößerten Maßstab und im Teilschnitt denjenigen Bereich des Frischwasserbehälters des Gerätes nach der Fig. 1, der mit der Wasserstandsanzeige versehen wird,

Fig. 3 einen ähnlichen Schnitt wie bei der Fig. 2, jedoch bei einer anderen Ausführungsform hinsichtlich der Anordnung der Skala der Wasserstandsanzeige und

Fig. 4 in Ansicht und im vergrößerten Maßstab, teilweise weggeschnitten, die Wasserstandsanzeige des Gerätes zum Zubereiten von heißen Getränken gemäß der Fig. 1 der Zeichnung.

In den Figuren der Zeichnungen sind nur diejenigen Teile eines Gerätes zum Zubereiten von heißen Getränken, wie Kaffee, Tee od.dgl. dargestellt, welche für das Verständnis der Erfindung von Bedeutung sind. So fehlen insbesondere die Schalt- und Steuerelemente, die ebenso wie die Heizeinrichtung in dem Gehäuse des Gerätes untergebracht sind. Ferner ist auf die Darstellung der Zuführungsleitung ebenwo verzichtet worden wie auf die Angabe von Einzelheiten im Bezug auf den Filter. Im übrigen können alle in den Zeichnungen nicht dargestellten Teile des Gerätes eine bekannte Ausbildung haben.

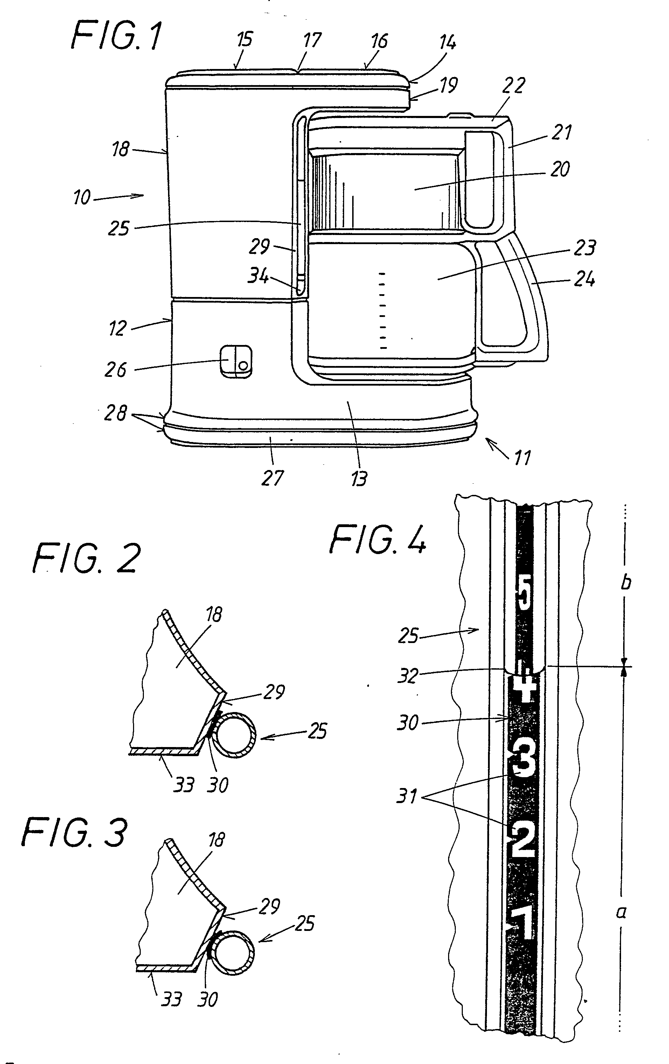

Dem Ausführungsbeispiel gemäß der Fig. 1 der Zeichnung ist ein generell mit 10 bezeichneter, sogenannter Kaffeeautomat zugrunde gelegt. Dieser hat ein Gehäuse 11, das aus einem der in dieser Technik üblichen Kunststoffe hergestellt ist. Das Gehäuse hat im Längsschnitt gesehen etwa L-förmige Ausbildung. Dabei bildet der aufrechte Teil 12 den kürzeren Schenkel dieses L's, während der waagerechte Teil 13 wesentlich niedriger, dafür aber länger gehalten ist. In dem Gehäuse 11 sind die Schalt- und Steuerelemente des Kaffeeautomaten 10 in bekannter Weise untergebracht. Das Gehäuse ist nach unten hin offen. Diese Öffnung wird jedoch durch einen Boden 27 verschlossen, beispielsweise derart, daß durch Aufstecken mit dem waagerechten Teil 13 des Gehäuses 11 des Kaffeeautomaten 10 eine Verbindung hergestellt wird. Im dargestellten Ausführungsbeispiel haben sowohl der untere Rand des waagerechten Teiles 13 des Gehäuses 11 als auch der Boden 27 eine jeweils mit 18 bezeichnete, umlaufende Verdickung. Im Bereich dieser Verdickung 28 liegen die Verbindungsmittel zwischen dem Boden 27 und dem Unterteil 13 des Gehäuses 11.

In der Verlängerung des aufrechten Teiles 12 des Gehäuses 11 des Kaffeeautomaten 10 liegt ein Frischwasserbehälter 18. Dieser kann mit der Stirnfläche des aufrechten Teiles 12 des Gehäuses 11 verbunden werden. Dies kann beispielsweise durch Aufstecken erfolgen, wobei gegebenenfalls Dichtungselemente zwischengeschaltet sind. Es kann aber jede übliche Verbindungsart benutzt werden, um den Frischwaserbehälter 18 mit dem Gehäuse 11 zu verbinden. Dabei ist nur darauf zu achten, daß das Frischwasser aus einer im Boden des Frischwasserbehälters befindlichen Öffnung einer Heizeinrichtung, beispielsweise einem Durchlauferhitzer, zugeführt werden muß. In einem solchen Durchlauferhitzer erfolgt dann in bekannter Weise das Erhitzen des Wassers. Das erhitzte Wasser wird über ein Steigrohr, welches z.B. den Frischwasserbehälter 18 ganz durchsetzen kann, nach oben geführt und zwar bis zur Höhe eines auskragenden Teiles 19 des Frischwasserbehälters 18. In dieser Höhe hat das Steigrohr einen waagerechten Bereich, der in dem Hohlraum des auskragenden Teiles 19 des Frischwasserbehälters 18 angeordnet ist. Am Ende des waagerechten Bereiches des Steigrohres liegt ein Auslaß. Dieser befindet sich etwa in der Mitte eines mit 20 bezeichneten Filtergehäuses. In dem Filtergehäuse 20 ist der eigentliche Filter angeordnet, der in bekannter Weise eine Filtertüte od.dgl. aufnimmt. In diese Filtertüte kann dann in bekannter Weise das Kaffeemehl od.dgl. eingebracht werden. Um die Bedienung des Filtergehäuses 20 zu erleichtern, hat dieser an seiner einen Seite einen Handgriff 21. Die obere Öffnung des Filtergehäuses 20 ist durch eine abnehmbare Abdeckung 22 verschlossen. Diese Abdeckung 22 hat einen in der Mitte angeordneten Durchlaß, damit - wie gewollt - das erhitzte Wasser aus dem Steigrohr in den Filter und damit zu dem dort befindlichen Kaffeemehl gelangen kann.

Das fertige Getränk, beispielsweise der Kaffee, gelangt durch einen meist zentral angeordneten Auslaß aus dem Filter in einen darunter angeordneten Aufangbehälter 23, der im gezeigten Ausführungsbeispiel als Glaskrug ausgebildet ist. Auf seiner Außenfläche hat der Glaskrug eine Markierung, die beispielsweise die Tassenanzahl angibt. Der Glaskrug bzw. der Auffangbehälter 23 hat ebenfalls einen Griff 24. Er steht auf einem vertieften, nicht näher bezeichneten Bereich des waagerechten Teiles 13 des Gehäuses 11.

In an sich bekannter Weise hat der Kaffeeautomat 10 einen Wasserstandsanzeiger 25. Dieser dient zum Erkennen des Füllstandes des Frisch- . wasserbehälters 18. Der Wasserstandsanzeiger 25 ist ein rohrförmiger Körper, der mit dem Frischwasserbehälter 18 ein kommunizierendes System bildet. Der Wasserstandsanzeiger 25 ist dabei über eine Dichtung 34 mit dem Frischwasserbehälter verbunden.

Auf den oberen Rand des Frischwasserbehälters 18 ist im gewählten Ausführungsbeispiel ein gesondert hergestellter, mit 14 bezeichneter Versteifungsk-örper aufgesteckt. Es handelt sich dabei um einen einstückigen, rahmenartigen Aufsteck-oder Stützkörper, der der Formstabilität der Seitenwandungen des Frischwasserbehälters dient.

Im gewählten Ausführungsbeispiel sind dem Kaffeeautomaten 10 zwei mit 15 und 16 bezeichnete Deckel zugeordnet, von denen jeder um 180° aus einer Schließlage in eine Öffnungslage oder umgekehrt bewegt werden kann. Zwischen den beiden Deckeln 15 und 16 ist eine Trennfuge 17 vorhanden. Die scharnierartigen Verbindungsmittel zwischen den beiden Deckeln 15 und 16 liegen unterhalb der Deckeloberfläche, sind daher in der Fig. 1 der Zeichnung nicht sichtbar.

Wie schon erwähnt, ist dem Kaffeeautomaten 10 eine mit 25 bezeichnete Wasserstandsanzeige zugeordnet. Diese liegt im gewählten Ausführungsbeispiel an der Außenseite des Frischwasserbehälters und zwar - vergl. dazu die Fig. 2 und 3 der Zeichnung - an einer ebenen Begrenzungswand 29. Dabei ist diese ebene Begrenzungswand geneigt zur Vorderseite 33 des Frischwasserbehälters 18 angeordnet. Wie die Fig. 1 der Zeichnung erkennen läßt, ist die ebene Begrenzungswand 29 so angeordnet, daß auch nach dem Aufstellen des Glaskruges und des Filtergehäuses 20 die Wasserstandsanzeige 25 für den Beschauer sichtbar ist.

Zu der Wasserstandsanzeige 25 gehört eine Skala 30, die mit Symbolen, wie Buchstaben oder - wie im dargestellten Ausführungsbeispiel - mit Zahlen 31 versehen ist. Erfindungsgemäß ist die Wasserstandsanzeige 25 als optische Linse ausgebildet, derart, daß die Skiala 30 und die Symbole 31 in dem mit Wasser gefüllten Längenbereich a der Wasserstandsanzeige 25 vergrößert, in dem darüber angeordneten, anderen Längenbereich b dagegen verkleinert sichtbar sind. Dadurch entsteht - wie in der Fig. 4 sehr gut zu erkennen ist - ein Übergang 32 zwischen den Längenbereichen a und b. Dieser Übergang 32 gibt den Füllstand des Frischwasserbehälters 18 an. Durch die Ausbildung der Wasserstandsanzeige als optische Linse hat der Benutzer den Vorteil, daß er die Symbole, wie die Buchstaben bzw. Zahlen 31 der Skala 30, sehr gut erkennen kann, weil sie vergrößert wiedergegeben sind. Dies gilt auch für den Übergang 32, der den Füllstand des Frischwasserbehälters 18 anzeigt. Dabei ist auf die Verwendung eines Schwimmers an der Oberseite der Wassersäule des Wasserstandsrohres 25 ganz verzichtet, so daß damit auch die Nachteile beseitigt sind, die dadurch entstehen können, daß ein Festklemmen oder ein hängenbleiben eines solchen schwimmerartigen Körpers im Wasserstandsanzeiger 25 erfolgt.

In den beiden dargestellten Ausführungsbeispielen ist die Wasserstandsanzeige 25 jeweils als rohrförmiger Körper ausgebildet, der aus einem durchsichtigen und brechenden Stoff hergestellt ist. Die optische Linse ist in den gewählten Ausführungsbeispielen dadurch geschaffen, daß die Wasserstandsanzeige von zwei Zylinderflächen begrenzt ist.

Hinsichtlich der Anordnung und der Anbringung der Skala sind zwei Ausführungsbeispiele wiedergegeben. Bei dem Ausführungsbeispiel nach der Fig. 2 der Zeichnung ist die Skala 30 an der ebenen Begrenzungswand 29 des Frischwasserbehälters befestigt, z.B. aufgeklebt. Die Wasserstandsanzeige 25 liegt dann davor. In diesem Falle liegt die Skala 30 in einer Ebene.

Bei der Ausführungsform nach der Fig. 3 der Zeichnung ist dagegen die Skala 30 auf der Außenseite der Wasserstandsanzeige 25 angebracht. Dadurch verläuft diese der Krümmung der Wasserstandsanzeige 25 entsprechend.

Nachzutragen bleibt noch, daß der Kaffeeautomat 10 mit einem an sich bekannten Schalter 26 ausgerüstet ist. Dieser kann eine Kontroll-Leuchte haben, die seinen Schaltzustand angibt. Eine solcher Schalter 26 dient in bekannter Weise dazu, den Stromkreis zu den Schalt- und Steuerelementen des Kaffeeautomaten zu öffnen oder zu schließen.

Wie bereits erwähnt, sind die dargestellten Ausführungen nur beispielsweise Verwirklichungen der Erfindung und diese nicht darauf beschränkt. Vielmehr sind noch mancherlei andere Ausführungen und Anwendungen möglich. So kann insbesondere abweichend von den dargestellten Ausführungsbeispielen auf eine gesondert hergestellte und nachträglich mit einem Teil des Kaffeeautomaten 10 zu verbindende Skala 30 verzichtet werden. Stattdessen kann man auf einem Teil des Außengehäuses des Frischwasserbehälters, z.B. auf der ebenen Begrenzungswand 29, eine Skala direkt anbringen und davor dann wie Wasserstandsanzeige 25 anordnen. Eine solche direkt angebrachte Skala läßt sich bei der Herstellung des Frischwasserbehälters 18 mit erzeugen, so daß es nicht mehr erforderlich ist, die Skala mit einem Teil des Kaffeeautomaten 10 zu verbinden. Anstelle der dargestellten Ziffern 31 kann die Skala 30 auch mit Buchstaben oder mit anderen Symbolen, beispielsweise mit Tassen versehen werden. Die Ausbildung der Wasserstandsanzeige 25 als optische Linse läßt sich auch bei anderen an sich bekannten Kaffeeautomaten anwenden.

In den Ausführungsbeispielen nach den Fig. 2 und 3 der Zeichnung liegt die Wasserstandsanzeige 25 jeweils vor einer eben gehaltenen Begrenzungswand 29 des Frischwasserbehälters 18. In Abwandlung dieser Ausführungsformen kann in dieser Begrenzungswand 29 eine vorzugsweise halbkreisförmige Vertiefung ange ordnet sein, in welche die Wasserstandsanzeige 25 teilweise hineinragt. Ferner ist es möglich, einer Wasserstandsanzeige 25 zwei Skalen zuzuordnen, die entfernt voneinander angeordnet sind. Auf diese Weise ergibt sich die Möglichkeit, die Ziffern der Skala von unterschiedlichen Richtungen her ablesen zu können.

Bezugszeichenliste :

10 - Kaffeeautomat
11 - Gehäuse
12 - aufrechter Teil (von 11)
13 - waagerechter Teil (von 11)
14 - Versteifungskörper (Stützkörper)
15 - 1. Deckel
16 - 2. Deckel
17 - Trennfuge
18 - Frischwasserbehälter
19 - auskragender Teil (von 18)
20 - Filter (Gehäuse des Filters)
21 - Handgriff (von 20)
22 - Abdeckung (von 20)
23 - Auffangbehälter (Glaskrug)
24 - Griff (an 23)
25 - Wasserstandsanzeiger
26 - Schalter
27 - Boden
28 - Verdickung
29 - ebene Begrenzungswand (von 18)
30 - Skala
31 - Buchstaben, Zahlen od.dgl. (von 30)
32 - Übergang (zwischen a und b)
33 - Vorderseite (von 18)
34 - Dichtung
a - mit Wasser gefüllter Längenbereich (von 25)
b - oberer Längenbereich (von 25)

**Ansprüche**

1. Gerät zum Zubereiten von heißen Getränken, wie Kaffee, Tee od.dgl., mit einem Gehäuse zur Unterbringung von Schalt-und Steuerelementen sowie einer Heizeinrichtung und mit einem Frischwasserbehälter, der zum Erkennen seines Füllstandes mit einer rohrförmigen, eine Skala aufweisenden Wasserstandsanzeige ein kommunizierendes System bildet,

**dadurch gekennzeichnet,**

daß die Wasserstandsanzeige (25) als optische Linse ausgebildet ist, derart, daß die Skala (30) und ihre Zahlen, Buchstaben (31) od.dgl. in dem mit Wasser gefüllten Längenbereich (a) der Wasserstandsanzeige (25) vergrößert, im darüber angeordneten anderen Längenbereich (b) dagegen verkleinert sichtbar sind, wobei der Übergang (32) zwischen den Längenbereichen (a und b) den Füllstand des Frischwasserbehälters (18) angibt.

2. Gerät nach Anspruch 1, dadurch gekennzeichnet, daß die aus einem durchsichtigen und brechenden Stoff hergestellte optische Linse von zwei Zylinderflächen begrenzt ist.

3. Gerät nach Anspruch 1 und 2, dadurch gekennzeichnet, daß die Skala (30) mit ihren Symbolen, wie Buchstaben, Zahlen (31) auf der dem Frischwasserbehälter (18) zugekehrten Seite, vorzugsweise Außenseite, des Wasserstandsanzeigers (25) angebracht ist (Fig. 3).

4. Gerät nach Anspruch 1 und 2, dadurch gekennzeichnet, daß die Skala (30) auf einer vorzugsweise ebenen Begrenzungswand (29) des Frischwasserbehälters (18) und die Wasserstandsanzeige (25) davor angebracht ist (Fig. 2).

5. Gerät nach einem der vorangehenden Ansprüche, dadurch gekennzeichnet, daß die die Wasserstandsanzeige (25) aufweisende ebene Begrenzungswand (29) des Frischwasserbehälters (18) geneigt zur Vorderseite (33) des Frischwasserbehälters (18) angeordnet ist.

6. Gerät nach Anspruch 1, dadurch gekennhzeichnet, daß die Skala (30) unmittelbar auf einer Außenwand des Frischwasserbehälters (18) angebracht ist.

7. Gerät nach Anspruch 1 und 5, dadurch gekennzeichnet, daß die Wasserstandsanzeige (25) teilweise in eine Vertiefung der Begrenzungswand (29) des Frischwasserbehälters (18) hineinragt.

8. Gerät nach einem oder mehreren der vorangehenden Ansprüche, gekennzeichnet durch die Verwendung einer Doppelskala.

FIG.1

FIG. 2

FIG. 3

FIG. 4

Fa. Robert Krups Stiftung &C o. KG